(19) Europäisches Patentamt
European Patent Office
Office européen des brevets

(11) **EP 4 730 789 A1**

(12) **EUROPEAN PATENT APPLICATION**

(43) Date of publication:
**22.04.2026 Bulletin 2026/17**

(21) Application number: **24306764.2**

(22) Date of filing: **21.10.2024**

(51) International Patent Classification (IPC):
*H04N 19/119* (2014.01)    *G06N 3/047* (2023.01)
*H04N 19/132* (2014.01)    *H04N 19/147* (2014.01)
*H04N 19/46* (2014.01)     *H04N 19/50* (2014.01)
*H04N 19/59* (2014.01)

(52) Cooperative Patent Classification (CPC):
H04N 19/50; G06N 3/045; G06N 3/047;
H04N 19/119; H04N 19/132; H04N 19/147;
H04N 19/46; H04N 19/59

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **SCHNITZLER, Francois**
 **56890 SAINT AVE (FR)**
• **LAMBERT, Anne**
 **35250 SAINT-AUBIN-D'AUBIGNE (FR)**
• **LE MEUR, Olivier**
 **35160 TALENSAC (FR)**
• **DAMODARAN, Bharath Bhushan**
 **56000 VANNES (FR)**

(74) Representative: **Interdigital**
**Immeuble ZEN 2**
**845 A, avenue des Champs Blancs**
**35510 Cesson-Sévigné (FR)**

(54) **PARTITION-BASED LATENT LEVEL FOR HYBRID INR NETWORK**

(57) A method and device propose, for a signal handled using feature-based INR methods, to partition the signal and specify a highest level of latent grid to be used for each partition. As a result, higher levels may not be encoded nor decoded, saving bitrate and decoding operations. This allows to decrease the bit rate and the decoding complexity of low frequency part of a signal using feature-based INR methods. Such approach has a far lower computational complexity than end-to-end neural compression approaches.

FIG. 13

**Description**

TECHNICAL FIELD

At least one of the present embodiments generally relates to a method and a device for encoding and decoding data and particularly to a hybrid implicit neural representation network using a partition-based latent level.

BACKGROUND ART

An implicit neural representation (INR) network is a neural network that is trained to represent a specific signal; the INR network is trained to predict a sample value of the signal when presented with the sample's spatial coordinates. A hybrid INR network improves the INR network's capability to learn local patterns of the signal. To that end, sample coordinates of the signal are first mapped into latent variables and the INR network is trained to represent the signal based on these latent variables. When the hybrid INR network is applied to signal compression, the latent variables represent the signal in the bitstream. To efficiently entropy code the latent variables, their respective distributions should be used. Current approaches estimate the latent variables' respective distributions based on context. The manner in which such context is constructed is instrumental in exploiting spatial and temporal redundancies across the latent variables.

SUMMARY

According to an aspect of at least one embodiment, an encoding method comprises partitioning a signal, selecting a highest encoded grid level for partitions of the signal, training a hybrid implicit neural representation (INR) network, and encoding, into a bitstream, information representative of parameters of the INR network, of latent variables, of partitions of the signal and of the highest encoded grid level for partitions of the signal.

According to an aspect of at least one embodiment, a decoding method comprises obtaining a bitstream carrying an encoded signal, the encoded signal comprising information representative of parameters of an INR network, of latent variables, of partitions of the signal and of the highest encoded grid level for partitions of the signal, selecting partitions for which latent variables must be decoded based on the highest encoded grid level for partitions of the signal, decoding latent variables for the selected partitions and set a default value for latent variables of the other partitions, and producing the signal using an INR network having the latent variables as input, the INR network being configured using the obtained parameters.

According to an aspect of at least one embodiment, an encoding apparatus comprises a processor configured to partition a signal, select a highest encoded grid level for partitions of the signal, train a hybrid implicit neural representation (INR) network, and encode, into a bitstream, information representative of parameters of the INR network, of latent variables, of partitions of the signal and of the highest encoded grid level for partitions of the signal.

According to an aspect of at least one embodiment, a decoding apparatus comprises a processor configured to obtain a bitstream carrying an encoded signal, the encoded signal comprising information representative of parameters of an INR network, of latent variables, of partitions of the signal and of the highest encoded grid level for partitions of the signal, select partitions for which latent variables must be decoded based on the highest encoded grid level for partitions of the signal, decode latent variables for the selected partitions and set a default value for latent variables of the other partitions, and produce the signal using an INR network having the latent variables as input, the INR network being configured using the obtained parameters.

One or more of the present embodiments also provide a computer readable storage medium (e.g., non-transitory) having stored thereon instructions for performing at least part of any of the methods described above. One or more embodiments also provide a computer program product including instructions for performing at least part of any of the methods described above.

Embodiments are described within the context of 2D image compression but also apply to many other signals, such as 2D video, 3D scenes and objects or haptic signals. Furthermore, these approaches have a far lower computational complexity than end-to-end neural compression approaches.

This summary section is provided to introduce a selection of concepts in a simplified form that is further described below in the detailed description section. This summary section is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

BRIEF SUMMARY OF THE DRAWINGS

FIG. 1 is a block diagram of an example system, according to which aspects of the present embodiments can be implemented.

FIG. 2 is a diagram illustrating an example INR network.

FIG. 3 is a block diagram of an example video encoder.

FIG. 4 is a block diagram of an example video decoder.

FIG. 5 is a diagram illustrating a hybrid INR network.

FIG. 6 is a block diagram illustrating an example video encoder applying a hybrid INR network based on COOL-CHIC.

FIG. 7 is a block diagram illustrating an example video decoder applying a hybrid INR network based on COOL-CHIC.

FIG. 8 is a diagram illustrating prediction of a latent variable distribution, using a spatial context.

FIG. 9 illustrates a block diagram illustrating an example video encoder applying a predictive hybrid INR network.

FIG. 10 illustrates a block diagram illustrating an example video decoder applying a predictive hybrid INR network.

FIG. 11 illustrates the principles of partitioning latent levels according to embodiments.

FIG. 12 illustrates an example process for encoding data based on a hybrid INR network using a partition-based latent level according to embodiments.

FIG. 13 illustrates an example process for decoding encoded data based on a hybrid INR network using a partition-based latent level according to embodiments.

FIG. 14 is a block diagram illustrating an example video decoder based on hybrid INR network combined with a partition-based latent level according to an embodiment.

DETAILED DESCRIPTION

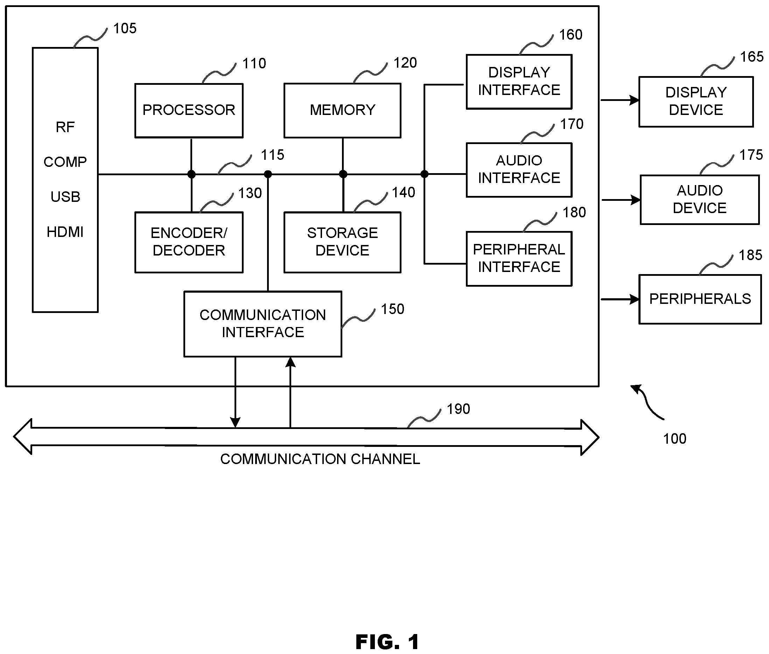

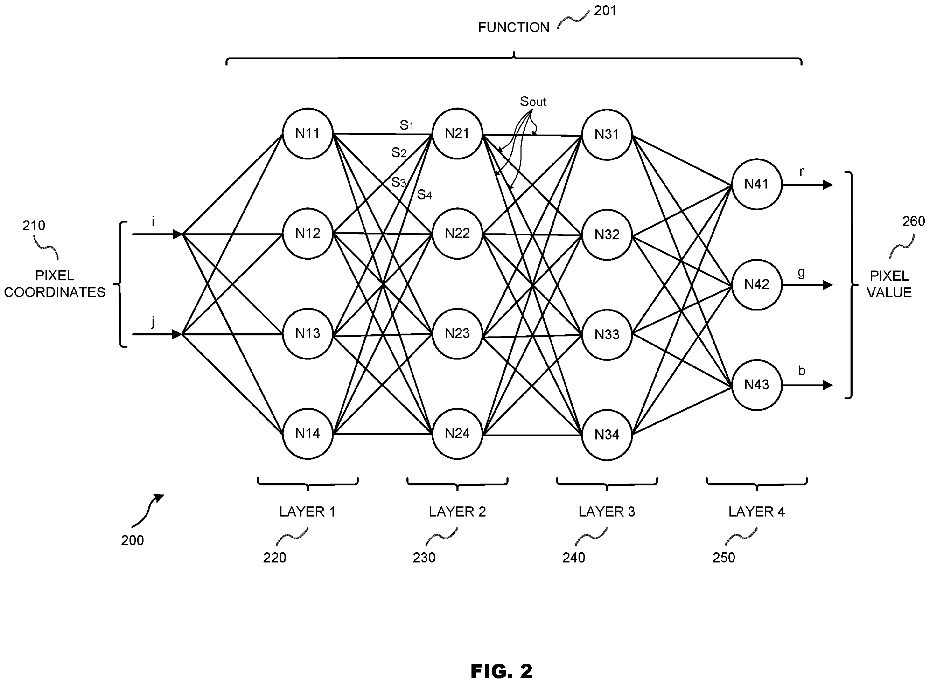

Apparatuses and methods described herein for encoding and decoding data applying a hybrid INR network or a predictive hybrid INR network. A system for processing and displaying content, with which various aspects and examples described herein may be implemented, is generally described in reference to FIG. 1, followed by a description of the aspects of the present disclosure in reference to FIGS. 2-14.

**FIG. 1** is a block diagram of an example system, according to which aspects of the present embodiments can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

Generally, video codecs can be classified into conventional codecs, autoencoders, and overfitted codecs. Conventional codecs, currently the most common ones, are based on predictive coding, such as those following the advance video coding (H.264/AVC), the high efficiency video coding (HEVC), or the versatile video coding (VVC) standards. On the other hand, an autoencoder is a neural network that is trained to map input images (video frames) into respective sets of latent variables and then map back the sets of latent variables to approximated versions of the input images. During training, the autoencoder parameters are optimized to minimize a rate-distortion cost function. Thus, using the trained autoencoder, encoding an image involves mapping the image into a set of latent variables and decoding the image involves mapping the set of latent variables into a reconstructed version of the image. Since autoencoders are generically trained (that is, their training is based on a large number of images) to compete with the performance of conventional codecs, for example, their complexity (the number of parameters and multiplications involved per pixel) is high. Relative to autoencoders, overfitted codecs, using INR networks, offer lower complexity while still achieving the performance levels of conventional codecs.

Representing data via INR networks is a relatively new technology that has only recently been investigated by the computer vision and computer graphics communities. INR networks are studied for the applications of compression, where an efficient representation of signals (such as, still images, videos, surfaces, and volumes) is required. In contrast to an autoencoder, an INR network is trained to represent a specific signal. Hence, unlike autoencoders, an INR-based codec is not generic but is adapted (overfitted) to the signal to be coded and is, therefore, more efficient. Moreover, since the INR network is trained to predict a signal based on the signal's coordinates, the trained network can be applied to progressively reconstruct the signal based on any set of coordinates (e.g., a subset of the coordinates used in the training, or any other set of extrapolated or interpolated coordinates therefrom). For simplicity of the presentation, aspects of INR network applications are described herein with respect to images (e.g., video frames); however, these aspects are extendable to other data frames, such as those representing surfaces of objects and volumetric data that may be changing overtime.

**FIG. 2** is a diagram illustrating an example INR network. In such context, an INR network 200 parameterizes a signal as a function 201, which takes coordinates 210 as input and outputs values 260 of a signal at these coordinates. INR networks have recently been applied to image, videos, 3D objects or haptic signals among other applications. In such context, the inputs 210 can be pixel coordinates $(c_1, c_2)$ and the INR may output 260 the color values $(r, g, b)$ or $(y, u, v)$ of the input pixel. The input coordinates may be modified by a transformation before being used as input for the neural network. This transformation can be a Fourier mapping, coordinate transformation, normalization etc. The INR can be used to reconstruct a signal by computing the signal values for every necessary coordinate inputs. It can be used to upsample a signal by generating output for input coordinates corresponding to the upsampled pixels, for example the mean of the coordinates between two consecutive pixels for upsampling by a factor of 2.

An INR network is for example a neural network composed of multiple layers, each layer includes multiple nodes (denoted by circles). Generally, the architecture of a neural network is characterized by the number of layers, the number of layers' nodes, and by the way the layers' nodes are connected. In the example of FIG. 2, the network 200 has four layers 220, 230, 240, 250 that are fully connected. For example, the first layer 220 includes four nodes N11, N12, N13, and N14 that each receives the coordinate values $(c_1, c_2)$ 210 of a pixel x and each outputs an output signal that, in turn, feeds the nodes of the next layer, N21, N22, N23, and N24. Likewise, the second layer 230 includes four nodes N21, N22, N23, and N24, that each receives the output signals of nodes from the previous layer, N11, N12, N13, and N14, and each outputs an output signal that, in turn, feeds the nodes of the next layer, N31, N32, N33, and N34. The fourth layer 250 includes three nodes N41, N42, and N43 that each receives the output signals of the nodes from the previous layer, N31, N32, N33, N34 and each outputs a color component value 260 of the pixel x, respectively, r, g, and b (or color component values of any other color model, such as y, u, and v). Each node in the network 200 represents an operator that generates an output signal based on the node's inputs. For example, node N21 of the second layer 230 receives as an input the output signals of nodes N11, N12, N13, and N14, respectively, $s_1, s_2, s_3$, and $s_4$. These inputs are translated into an output signal $s_{out}$ that feeds the nodes of the third layer 240. A node's operator can be expressed as follows:

$$s_{out} = A(p_0 + \sum_{i=1}^{L} p_i \cdot s_i), \qquad (1)$$

where, L denotes the number of input signals (i.e., the number of nodes from the previous layer that connect to the node), $s = \{s_i : i = 1 \ to \ L\}$ denotes the node's input signal vector, $s_{out}$ denotes the node's output signal, $p = \{p_i : i = 0 \ to \ L\}$ denotes the node's parameter vector (or weight vector), and A denotes an activation function (e.g., ReLU, Sigmoid, or Tanh). Each neural layer can be described as a function that first multiplies the input by a tensor, adds a vector called the bias and then applies a nonlinear function on the resulting values. The shape (and other characteristics) of the tensor and the type of non-linear functions are called the architecture of the network. We will denote the values of the tensor and the bias by the term "weights". The weights (and parameters of the activation functions, if such parameters exist) of respective nodes are collectively referred to as the parameters $\theta$ of the network 200. These parameters $\theta$ are determined through a training process. The network operation, denoted by $f_\theta$, is therefore defined by the network parameters $\theta$. Once the parameters are learned, they may be encoded to create a bitstream allowing to reconstruct the input signal.

Hence, an INR network 200 is trained to predict a pixel value of an image, $x(c_1, c_2)$, based on the pixel's coordinates $(c_1, c_2)$ - that is, $f_\theta(c_1, c_2) = (r, g, b)$ (or $f_\theta(c_1, c_2) = (y, u, v)$). During a training phase of an INR network 200, the parameters $\theta$ (or a subset of them) are determined. This is done via an optimization process through which the parameters $\theta$ that minimize a loss function can be determined. For example, for an image x of size (M $\times$ N), the following cost function can be used:

$$Cost = D(\boldsymbol{x}, f_\boldsymbol{\theta}) + \lambda R(\theta) \qquad (2)$$

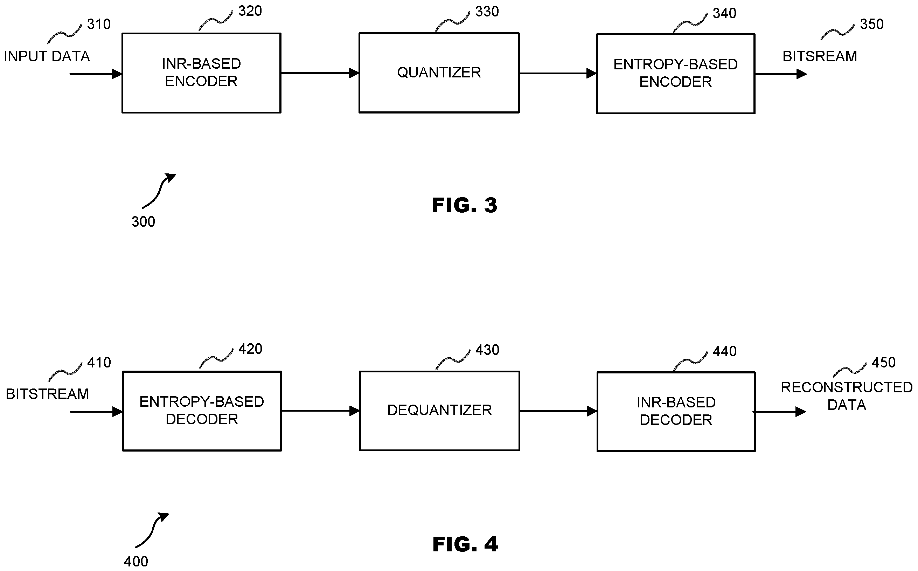

where, D is a distortion measure, measuring the fidelity of the estimated pixel values, provided by $f_\theta$, relative to the ground truth, that is, the corresponding pixel values from the original image, denoted by x, R is the resulting bitrate of the encoded parameters $\theta$ (e.g., encoded by quantization and entropy coding as discussed with respect to FIG. 3) and $\lambda$ is a trade-off parameter that can be set to determine the balance between D and R. Note that the distortion measure D can be any metric that measure the distance (or similarity) between the original image x and its estimated version provided by $f_\theta$, such as a mean squared error metric or a learned perceptual image patch similarity (LPIPS) metric. For example, a mean squared error metric can be expressed as:

$$D_{MSE} = \frac{1}{MN}\sum_{c_1, c_2 \in [0, N-1] \times [0, M-1]} \left(x(c_1, c_2) - f_\boldsymbol{\theta}(c_1, c_2)\right)^2 ,$$
$$(3)$$

where, N and M are the width and height of the image x that the INR network is trained to predict. The optimization of the network parameters $\theta$, according to equation (2), is typically performed by a machine learning optimization technique, applying, for example, a batch gradient descent algorithm. Following the training of the INR network 200 and using the optimal parameters $\theta$ (obtained via the optimization process), the INR network can be applied to predict a pixel value based on its corresponding coordinate values.

To decompress the signal, $f_\theta$ is evaluated at all relevant coordinates. These coordinates can be selected at decoding. A typical choice would be all pixel coordinates for an image or video. As an example, for a 256x256 pixel image, these coordinates could be all pairs $(c_1, c_2)$ for all $c_1 \in 0, 1, ..., 255$ and $c_2 \in 0, 1, ..., 255$. Other choices are possible, for example to upsample, downsample or extend the original image.

The bitstream encoding a signal is thus created by encoding the parameters of the neural network. This is typically done by a neural compression codec such as Neural Network Coding (NNC)/ ISO/IEC 15938-17 or MPEG-7 part 17 or simply by quantizing the parameters and/or pruning some neurons from the network and using conventional entropy coding such as arithmetic coding or auto-regressive models.

Using INR networks for the application of encoding and decoding images is further described with respect to FIGS. 3 and 4.

FIG. 3 is a block diagram of an example video encoder. In the example of FIG. 3, the video encoder 300 includes an INR-based encoder 320, a quantizer 330, and an entropy-based encoder 340. The INR-based encoder 320 receives an input data 310 to be coded. The input data 310 can be data associated with a frame of video (an image), a frame of a surface representation of an object, or a frame of volumetric data. To code the input data 310, the INR-based encoder 320 trains an INR network (e.g., the INR network 200 described herein). Specifically, based on the input data 310, the INR-based encoder 320 optimizes a cost function associated with the function $f_\theta$, representative of the INR network, to determine the optimal network parameters $\theta$. For example, for an input image with dimensions W and H, W times H pairs of pixel coordinates (i,j) and corresponding pixel values x(i, j) can be used to train the INR network according to equation (2). The optimal parameters, generated by the INR-based encoder 320, are then quantized by the quantizer 330, and then the quantized parameters are entropy-coded, by the entropy-based encoder 340, into a bitstream 350. Alternatively, the optimal parameters, generated by the INR-based encoder 320, can be coded for example using neural compression codecs such as Neural Network Coding (NNC)/ ISO/IEC 15938-17 or MPEG-7 part 17. The bitstream 350 can be used by a decoder to reconstruct the input image 310, as described in reference to FIG. 4.

**FIG. 4** is a block diagram of an example video decoder. The decoder 400 generally reverses the operation of the encoder 300 of FIG. 3. In the example of FIG. 4, the video decoder 400 includes an entropy-based decoder 420, a dequantizer 430, and an INR-based decoder 440. As illustrated, the decoder 400 receives the bitstream 410, 350 (generated by the encoder 300) and entropy-decodes therefrom the quantized INR network parameters. The dequantizer 430 is then employed to dequantize these quantized INR network parameters, resulting in a restored version of the INR network parameters to be provided to the INR-based decoder 440.

The INR-based decoder 440 applies the trained INR network, defined by the restored INR network parameters, to generate the reconstructed data 450. For example, to decode an input image, the INR-based decoder 440 uses the INR network to predict the value of (or to evaluate $f_\theta$ using the coordinates of) any pixel of the input image. Thus, the decoder 400 can be applied to: 1) reconstruct the whole encoded image 310; 2) to reconstruct only a region of the encoded image; or 3) to progressively reconstruct the encoded image. For example, at the encoder 300, an INR network may be trained to predict pixel values of an image with dimensions $W$ = 256 by $H$ = 256 based on the corresponding coordinates. At the decoder 400, pixel values of the image can be predicted by evaluating the trained INR network using: 1) the full coordinate set used for training, including all pairs of $i \in 0,1,...,255$ and $j \in 0,1,...,255$; 2) a subset of the full set, including coordinates from a region of the encoded image; or 3) a first subset of the full set, including coordinates that subsample the image (forming a low-resolution version of the encoded image) and then a second subset including the remaining coordinates. Any set of coordinates can be used to predict the corresponding pixel values, for example, in order to interpolate or to extrapolate the encoded image 310.

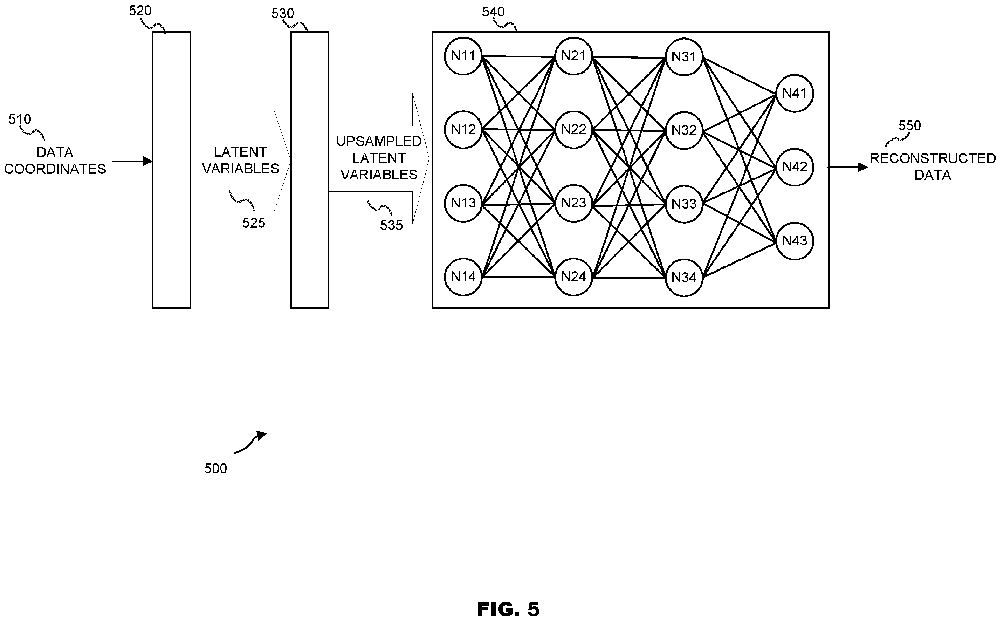

Hybrid INR networks have recently been applied to representing data, including images, videos, 3D objects, and volumetric data, among other applications. In a hybrid INR network, the data coordinates are first mapped into latent variables (or a feature vector). The latent variables are then used as input for the neural network. An example for a hybrid INR network is described in reference to FIG. 5.

**FIG. 5** is a diagram illustrating a hybrid INR network. In an aspect, this hybrid INR network 500 can be applied by the INR-based encoder 320 of FIG. 3 and the INR-based decoder 440 of FIG. 4. In the example of FIG. 5, during the encoding of input data (that is, the training of the network 500), the input data's coordinates 510 are first mapped, by a mapping unit 520, into respective latent variables 525, i.e., vector of latent features. The mapping can be implemented for example by a lookup table, a partition of the signal, a hash function and/or a linear combination of features or directly learned these features. The mapping may also involve any transformation, such as a Fourier transformation, a coordinate transformation, a normalization transformation, or a combination thereof. The latent variables 525 may have different resolutions and may need to be upsampled, for example by an up-sampling unit 530, resulting in upsampled latent variables 535. As an example, the latent variables may be co-located with some pixels of the image, i.e., latent variables may be associated to the intersections of one or multiple grids defined on the picture. We may denote these latent variables by "latent grids". To obtain a latent vector for pixels that are not collocated with an intersection of the grid, the latent variables are upsampled. The upsampled latent variables are used as an input to an INR synthesis network 540 (e.g., such as INR network 200), trained to produce the reconstructed data 550. In a hybrid INR network 500 the latent variables 525 are trained together with the parameters $\theta$ of the INR network 540, resulting in optimal network parameters and optimal latent variables. Using such an architecture helps in handling the local attributes of the input data. Indeed, a group of latent variables that correspond to a given part of the data may be uncorrelated with other groups of latent variables that correspond to other parts of the data, and, thus, groups of latent variables can be tailored to (or be characteristic of) corresponding parts of the data.

Following the training of the hybrid INR network 500 (e.g., by the encoder 320), the learned latent variables 525 and network parameters are quantized (e.g., by the quantizer 330) and coded (e.g., by the entropy-based encoder 340) into the bitstream. Thus, during inference, first the latent variable 525 and the network parameters of the trained INR network 540 are decoded (e.g., by the entropy-based decoder 420) from the bitstream and dequantized (e.g., by the dequantizer 430). Then, the decoded and dequantized latent variables are up-sampled 530. To reconstruct the data 550, the up-sampled latent variables are fed into the trained INR network 540 using the decoded and dequantized network parameters of the INR network.

In hybrid INR networks, the latent variables, denoted by $y$, are typically the largest contributor to the bitstream size (several orders of magnitude larger than that contributed by the INR network parameters). One approach to reduce the transmission cost of these latent variables is to entropy code these variables based on their learned distributions.

The attention given to the entropy coding of the latent features appears on the new formulation of the loss function:

$$\min_{(\hat{y},\theta,\psi)} D\left(x, f_\theta\left(\text{upsample}(\hat{y})\right)\right) - \lambda \log_2 p_\psi(\hat{y}), \qquad (4)$$

where $\hat{y}$ is the quantized latent and $p_\psi(\hat{y})$ is the discrete distribution over the quantized latent features. The distribution of these latent features can for example be a known distribution or estimated using an auto regressive probability model.

According to Equation (4), minimizing the rate associated to the transmission of the compressed version of the frame relies on minimizing the rate associated to the latent features. This can be achieved by reducing the amount of information contained in the latent features risking a poor reconstruction of the sent frame and an increase of distortion in $\hat{x}=f_\theta$ ("upsample" $(\hat{y})$). In other words, less information in $\hat{y}$ results in more distortion in $\hat{x}$. It may also be achieved by estimating the distribution of the sent latent as close as possible to the real (unknown) one using a well-chosen probability model. If that probability model is trained, it must be included in the bitstream.

Due to its high dimension the modeling of the joint distribution of $\hat{y}$ is usually untrackable. Instead it is typical to factorize $p_\psi$ ($\hat{y}$) and use a set of C context latents $c^s_{ijk}$ such that the distribution of each quantized latent $\widehat{y_{ijk}}$ is conditioned on C spatially neighboring latents that have already been decoded and selected in a way to introduce as little sequentiality as possible to allow parallel decoding of the L channels, for example in a wavefront-like approach. The position of the latent considered must be known by the emitter and the receiver. The factorization of $p_\psi$ ($\hat{y}$) is given by:

$$p_\psi\ (\hat{y}\ ) = \prod_{i,j,k} p_\psi\ (\widehat{y_{ijk}}\ |c^s_{ijk}\ ),$$

Where $p_\psi\ (\widehat{y_{ijk}}\ |\ c^s_{ijk}\ )$ denotes the conditional probability of one latent value at position (i, j, k) conditioned on its spatial context $c^s_{ijk}$ . (i, j) represents the spatial coordinate and k represents a latent feature.

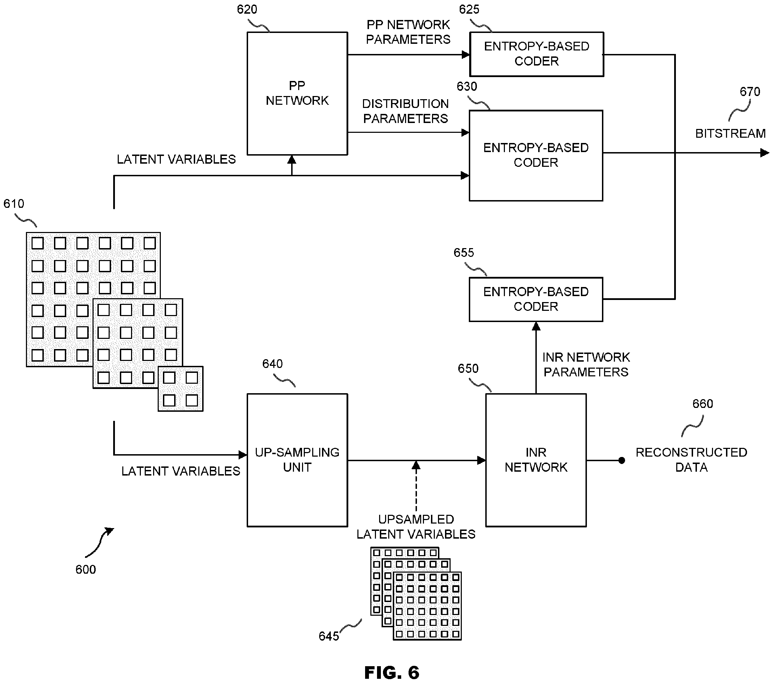

An example of hybrid INR network named a coordinate-based low complexity hierarchical image codec (COOL-CHIC), was proposed by Ladune et al. (see, Ladune et al., "COOL-CHIC: Coordinate-based low complexity hierarchical image codec," International Conference on Computer Vision (ICCV), 2023, hereinafter "Ladune"). In Ladune, the latent variables are arranged in hierarchical layers (or channels) ranging from a low-resolution representation (that provides for compact representation of smooth image regions) to a high-resolution representation (that captures the fine details of the image). Principles of the hybrid INR network proposed in Ladune are described below in reference to FIGS. 6-7.

**FIG. 6** is a block diagram illustrating an example video encoder 600 applying a hybrid INR network based on COOL-CHIC. The encoder 600 includes a probability prediction (PP) network 620, an up-sampling unit 640, an INR network 650, and entropy-based coders 625, 630, 655. The encoder 600 is configured to process latent variables 610 (e.g., latent variables 525 generated by the mapping unit 520 of FIG. 5). The encoder 600 up-samples, by the up-sampling unit 640, the latent variables. Based on these upsampled latent variables 645 the INR network 650 is trained (overfitted) to produce reconstructed data 660 (e.g., a reconstructed image of a video frame). The training results in optimal INR network parameters $\theta$ that are coded, by the entropy-based coder 655, into the bitstream 670. In an inference mode, reconstructing the data (e.g., by a decoder 700) involves feeding the trained INR network, defined by the optimal network parameters $\theta$, with the upsampled latent variable. And so, in addition to the network parameters $\theta$, the latent variables need to be coded into the bitstream 670. As further explained below, due to their large bit representation, efficient coding of the latent variables calls for the estimation of their distributions. To that end, the encoder 600 can be further configured to learn the distributions of respective latent variables using the PP network 620 - that is, a network trained to produce parameters of distributions of respective latent variables. Based on these learned distribution parameters the entropy-based coder 630 codes the latent variables into the bitstream 670. The PP network is defined by PP network parameters, denoted by $\psi$, determined during the training of the PP network 620. The entropy-based coder 625 codes these PP network parameters into the bitstream 670. Note that in the example of FIG. 6, while the entropy-based coder 630 that codes the latent variables relies on their learned respective distributions, the other entropy-based coders 625, 655 that code the PP network parameters and the INR network parameters rely on respective non-learned distributions. In an aspect, for some of the latent variables respective non-learned distributions can be used by the entropy-based coder 630. These non-learned distributions may be fixed distributions or may be distributions that was learned with respect to other latent variables (e.g., latent variables representing data from previous frames).

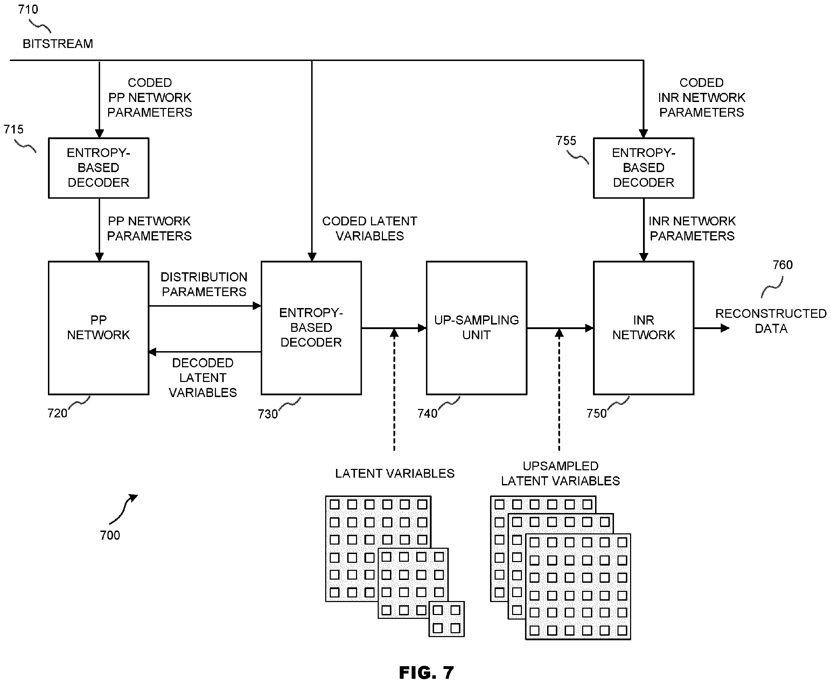

**FIG. 7** is a block diagram illustrating an example video decoder applying a hybrid INR network based on COOL-CHIC. The decoder 700 includes a PP network 720, an up-sampling unit 740, an INR network 750, and entropy-based decoders 715, 730, 755. The PP network 720 produces distribution parameters of respective latent variables. The PP network 720 operates based on learned PP network parameters $\psi$, determined during the training of the PP network 620. The entropy-based decoder 715 decodes these PP network parameters from the bitstream 710. Based on the produced distribution parameters 720, the entropy-based decoder 730 decodes the latent variables from the bitstream 710. Already decoded latent variables are provided back to PP network to serve as a context in producing the distribution parameters of the currently decoded latent variable. The decoded latent variables are then upsampled by the up-sampling unit 740 (as performed by the up-sampling unit 640 at the encoder 600). Fed by the up-sampled latent variables, the INR network 750 reconstructs the data 760 (e.g., a reconstructed image of a video frame) it is trained to synthesize based on the INR network parameters, decoded from the bitstream 710 by the entropy-based decoder 755.

The operation of the hybrid INR network is further explained with respect to an image *x* of a video frame, however, *x* may represent other types of data (such as a surface or a volume) that can be associated with a frame. Note that latent variables representative of data regions (e.g., pixels) from a data frame (e.g., a video frame) referred to herein also as corresponding to that data frame.

As illustrated, the INR network 650, 750 utilizes a hierarchical representation that includes multiple layers of different spatial resolutions 610. Each layer represents an image $x$ with a width $W$ and a height $H$ with a corresponding level of detail. Formally, the discrete latent variables, denoted by $\hat{y}$, can include $K$ layers of latent variables: $\hat{y} = \{\hat{y}_k, k = 0: (K - 1)\}$. Each layer $\hat{y}_k$ is of width $W/2^k$ and of height $H/2^k$. During the up-sampling 640, each layer $\hat{y}_k$ may be upsampled by a factor of $2^k$ (using any interpolation method) to obtain the upsampled layer version, denoted by $\hat{z}_k$. Together, the upsampled layers, $\hat{z} = \{\hat{z}_k, k = 0: (K - 1)\}$, result in a dense 3D representation 645 of dimension $W$ by $H$ by $K$. Thus, the INR network 650 can be trained based on $W$ by $H$ inputs of 2(i, j), where each input can include up to $K$ latent variables, that is, 2(i, j) = {$\hat{z}$(i, j, k), $k = 0: (K - 1)$)}. For example, the trained INR network 750 can be used to predict a reconstructed pixel $\hat{x}(i, j)$, of the original pixel $x(i, j)$, by $\hat{x}(i, j) = f_\theta(\hat{z}(i, j))$. In an aspect, depending on the desired bitrate, not all the layers of the latent variables may be used to represent (code) an image x.

When compressing an image $x$ the goal is to do so while minimizing a cost function, as discussed with respect to equation (2). In the case of a hybrid INR network, the cost of coding an image can be expressed as:

$$Cost = D(\boldsymbol{x}, f_{\boldsymbol{\theta}}(\hat{z})) + \lambda R(\hat{y}, \theta, \psi), \qquad (4)$$

where $x$ denotes an image to be coded with $H$ hight, W width, and V color channels; where $\hat{y}$ denotes the quantized latent variables and $\hat{z}$ denotes their upsampled version; where $f_\theta$ denotes the INR network 650, 750 and $\theta$ denotes the INR network parameters; where $f_\psi$ denotes the PP network 620, 720 and $\psi$ denotes the PP network parameters; where D denotes a distortion metric measuring the distance between the image $x$ and its reconstructed version $\hat{x}$, as produced by the INR network $f_\theta$ from the upsampled latent variables $\hat{z}$, that is, $\hat{x} = f_\theta(\hat{z})$; and where $R$ denotes the rate (in bits per pixel) measuring the number of bits that are required to represent a pixel in a bitstream, that is, the number of bits that are required to represent $\hat{y}, \theta$, and $\psi$. The distortion D and the rate $R$ are balanced by a scalar value denoted by $\lambda$. In a case where the up-sampling unit 640 is implemented by a neural network, the parameters of that network are also learned and coded into the bitstream 670 to be used by the up-sampling unit 740 when used in an inference mode.

The objective, thus, is to find the latent variables $\hat{y}$, the INR network parameters $\theta$, and the PP network parameters $\psi$ that minimize the coding cost, as follows:

$$\min_{\hat{y},\theta,\psi} Cost = \min_{\hat{y},\theta,\psi} \left( D\left(x, f_{\boldsymbol{\theta}}(\hat{z})\right) + \lambda R(\hat{y}, \theta, \psi) \right). \qquad (5)$$

Since the contribution of the INR network parameters $\theta$ and the PP network parameters $\psi$ to the rate $R$ is not as significant as that of the latent variables $\hat{y}$, only the latter can be considered when minimizing the coding cost, that is, $R(\hat{y}, \theta, \psi) \approx R(\hat{y})$. Furthermore, $R(\hat{y})$ can be replaced by the cross entropy. Thus, equation (5) can be replaced by:

$$\min_{\hat{y},\theta,\psi} Cost = \min_{\hat{y},\theta,\psi}(D\left(x, f_{\boldsymbol{\theta}}(\hat{z})\right) - \lambda \log_2 P_\psi(\hat{y})), \qquad (6)$$

where $P_\psi(\hat{y})$ is the joint distribution of the latent variables $\hat{y}$. According to Equation (6), minimizing the cost involves minimizing the rate associated with the latent variables. This can be achieved by reducing the amount of information contained in the latent variables, at the price of a less accurate reconstruction, as less information in $\hat{y}$ is likely to increase the distortion D. Alternatively, minimizing the cost can be achieved by obtaining estimates of the distributions of the respective latent variables, as described herein.

Due to the high dimensionality of the latent variables, modeling of the joint distribution of $\hat{y}$, $P_\psi(\hat{y})$, is not tractable. Instead, $P_\psi(\hat{y})$ can be factorized as follows:

$$P_\psi(\hat{y}) = \prod_{i,j,k} p_\psi\left(\hat{y}_{ijk} \big| c_{ijk}^s\right), \qquad (7)$$

where $p_\psi\left(\hat{y}_{ijk} \big| c_{ijk}^s\right)$ denotes a discrete conditional probability of a latent variable at position (i, j, k) conditioned on a corresponding spatial context $c_{ijk}^s$. Where (i, j) represents the spatial coordinate of a latent variable in a layer k. The spatial context $c_{ijk}^s$ may be provided by spatially neighboring latent variables that have already been decoded, and preferably selected in a way that enables parallel decoding of the different layers of the latent variables (e.g., in a wavefront-like approach).

In practice, the discrete distribution $p_\psi\left(\hat{y}_{ijk}\middle|c_{ijk}^s\right)$ can be modeled by integrating the continuous distribution of the non-quantized latent variable, denoted by g(y) and modeled as a Laplacian distribution, for example. Thus, the PP network 620 learns the expectation parameter, $\mu_{ijk}$, and the scale parameter, $\sigma_{ijk}$, based on the context $c_{ijk}^s$. Accordingly, the probability of a latent variable $\hat{y}_{ijk}$ can be expressed as:

$$p_\psi\left(\hat{y}_{ijk}\middle|c_{ijk}\right) = \int_{\hat{y}_{ijk}-0.5}^{\hat{y}_{ijk}+0.5} g(y)dy, \tag{8}$$

where $g \cong \mathcal{L}(\mu_{ijk}, \sigma_{ijk})$ denotes a Laplacian distribution. Thus, in the case of a Laplacian distribution, for example, given a context $c_{ijk}$, the PP network 620 can be trained to produce the corresponding distribution parameters, that is, $\{\mu_{ijk}, \sigma_{ijk}\} = f_\psi(c_{ijk})$.

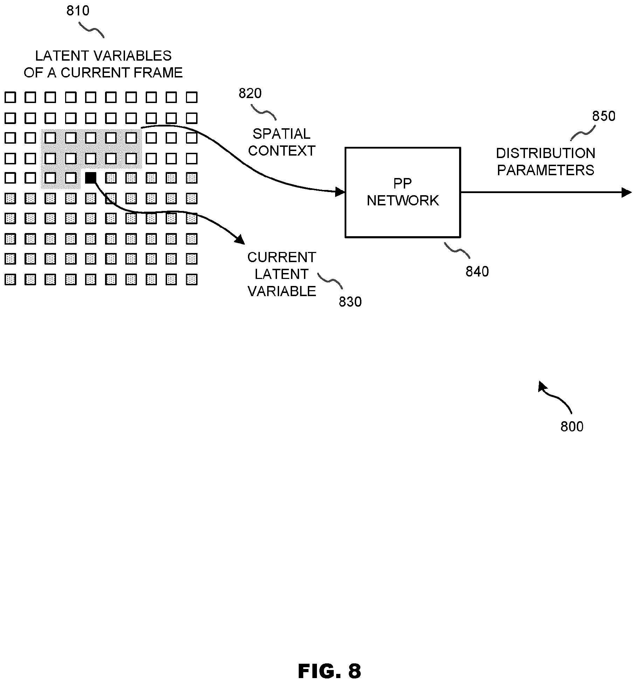

FIG. 8 is a diagram illustrating prediction of a latent variable distribution, using a spatial context 800. For simplicity of the presentation, only one layer of the latent variables 810 is illustrated, however, processes applied to this layer can be similarly applied to the other layers. The example of FIG. 8 illustrates the process of predicting a distribution of a current latent variable (indicated by a black square) to be coded (e.g., by encoder 600 or 900) or to be decoded (e.g., by decoder 700 or 1000). However, when coding the latent variable, typically, neighboring latent variables from the current frame are available. While when decoding the latent variable, typically, some of the neighboring latent variables from the current frame are not yet available (decoded). This is indicated by the white squares (available latent variables) and the patterned squares (not yet available latent variables).

As illustrated, a spatial context 820 can be constructed based on the latent variables in the spatial neighborhood of the current latent variable 830 - that is, for a current latent variable at position (i, j, k), latent variables can be selected within a neighborhood located relative to position (i, j, k) (e.g., latent variables grouped by the gray background in FIG. 8) to form the spatial context $c_{ijk}^s$. The obtained spatial context, $c_{ijk}^s$, can then be used by the PP network 840 to predict the distribution of the current latent variable. The distribution of the current latent variable is predicted by estimating the parameters of that distribution (e.g., $\{\mu_{ijk}, \sigma_{ijk}\}$). To that end, in the encoder, the PP network 840 is trained to produce, for each latent variable, the distribution parameters 850 based on the respective spatial context. This training can be done by minimizing the coding cost expressed in equation (6). The training of the PP network 840 results in the PP network parameters $\psi$. In the decoder, the trained PP network 840 is operated in an inference mode to produce, for each latent variable, the distribution parameters 850 from the respective spatial context. The trained PP network 840 operates based on the PP network parameters $\psi$ determined by the encoder during training and provided to the decoder in the bitstream.

In the case of a video stream, for example, a hybrid INR network can be used to represent each image of a video frame by a set of latent variables, $\hat{y}$, that (together with the PP network parameters $\psi$ and the INR network parameters $\theta$) can be coded into a bitstream. To decrease the bitrate of the compressed video, the set of latent variables can be trained to represent a group of video frames (see, e.g., Hyunjik et al., "C3: High-Performance and Low-Complexity Neural Compression from a Single Image or Video," Proceedings of the IEEE/CVF Conference on Computer Vision and Pattern Recognition (CVPR), 2024, pp. 9347-9358). However, such an approach makes it difficult to randomly access individual frames at the decoder end. In addressing this shortcoming, Leguay et al. propose a predictive hybrid INR network applicable to individual frames (see, Leguay et al., Cool-chic video: Learned video coding with 800 parameters, Data Compression Conference (DCC) 2024, IEEE, pp 23-32, 2024, hereinafter "Leguay").

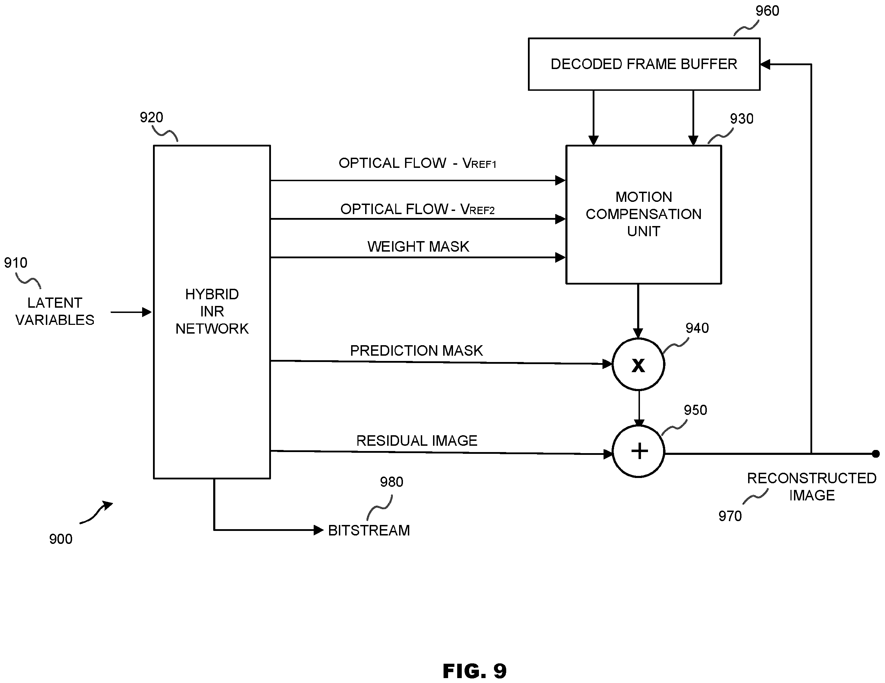

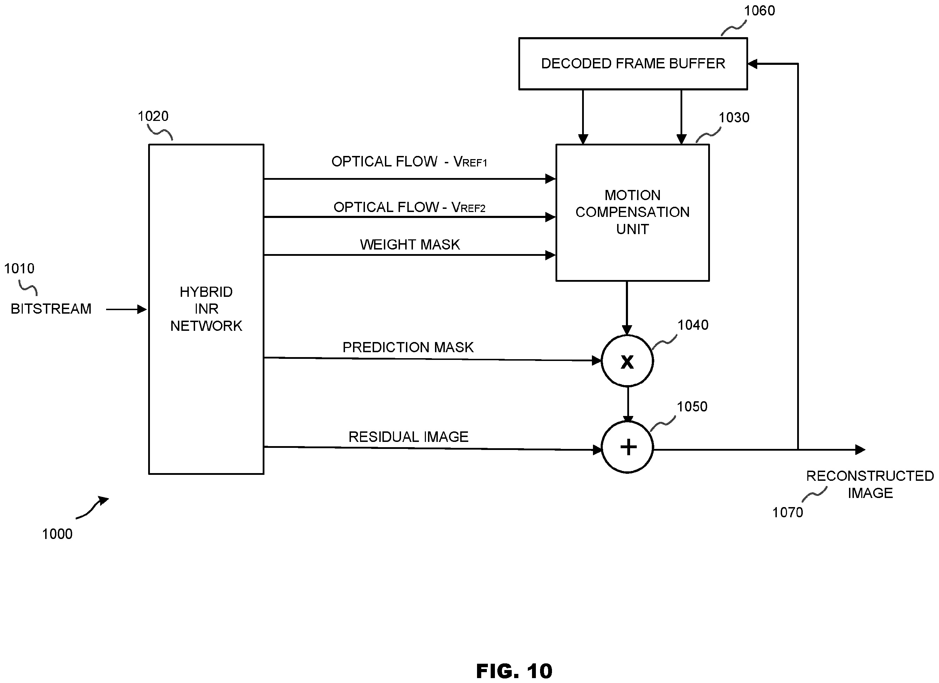

Principles of the predictive hybrid INR network proposed in Leguay are described next in reference to FIGS. 9 and 10. The operation of the predictive hybrid INR network is explained herein with respect to an image x of a video frame, however, x may represent other types of data (such as a surface or a volume) that can be associated with a frame. Note that latent variables representative of data regions (e.g., pixels) from a data frame (e.g., a video frame) referred to herein also as corresponding to that data frame.

FIG. 9 illustrates a block diagram illustrating an example video encoder 900 applying a predictive hybrid INR network. The encoder 900 receives, as an input, latent variables 910 and outputs a bitstream 980. The encoder 900 includes a hybrid INR network 920, a motion compensation unit 930, a multiplier 940, an adder 950, and a decoded frame buffer 960. The hybrid INR network 920 generally operates (in a training mode) as the hybrid INR network described in reference to FIG. 6. However, in this case the hybrid INR network is trained to produce two optical flows, $v_{ref1}$ and $v_{ref2}$, a weight mask $\beta$, a prediction mask $\propto$, and a residual image r. The optical flows represent the pixel-wise motion between respective reference frames (already reconstructed images 970, stored in the decoded frame buffer 960) and the current frame. And so, the motion compensation unit 930 can use these optical flows to generate a prediction, denoted by $\tilde{x}$, of the currently coded image x, as follows:

$$\tilde{x} = \beta \cdot warp(\hat{x}_{ref1}, v_{ref1}) + (1 - \beta) \cdot warp(\hat{x}_{ref2}, v_{ref2}), \qquad (9)$$

where *warp* is an operator that warps (i.e., spatially maps) an image into another image based on motion vectors given by an optical flow. Specifically, a first reference image, $\hat{x}_{ref1}$, is warped into a first prediction, $\tilde{x}_1$ = *warp* ($\hat{x}_{ref1}$, $v_{ref1}$) and a second reference image, $\hat{x}_{ref2}$ is warped into a second prediction, $\tilde{x}_2$ = *warp* ($\hat{x}_{ref2}$, $v_{ref2}$). Using elementwise multiplication, denoted by "·", the two predictions are then blended by the mask $\beta$, yielding the prediction image $\tilde{x}$. As illustrated in FIG. 9, the prediction image $\tilde{x}$ (output of the motion compensation unit 930) is then corrected by the residual image r, as follows:

$$\hat{x} = r + \propto \cdot \tilde{x}, \qquad (10)$$

where, the prediction mask $\propto$ is a binary mask that can be used to mask out 940 a prediction pixel if it does not reliably predict the corresponding pixel in x. Adding 950 the masked prediction image, $\propto \cdot \tilde{x}$, to the residual image r produces the reconstructed image 970, $\hat{x}$.

Hence, the two optical flows, $v_{ref1}$ and $v_{ref2}$, the weight mask $\beta$, the prediction mask $\propto$, and the residual image r can be learned by minimizing the coding cost expressed in equation (4), where $f_\theta(\hat{z}) = \tilde{x} = r + \propto \cdot \tilde{x}$. Note that the predictive hybrid INR network, illustrated in FIG. 9, can be applied using only one reference image or any number of reference images available in the decoded frame buffer 960. In such a case equation (9) can be expressed as:

$$\tilde{x} = \sum_{q=1}^{Q} \beta_q \cdot warp(\hat{x}_{refq}, v_{refq}), \qquad (11)$$

Where, Q is the number of reference images used; where $\sum_{q=1}^{Q} \beta_q$ is equal to an all-ones matrix, where $v_{refq}$ is the optical flow with respect to $\hat{x}_{refq}$, that is, the $q^{th}$ reference image. In a variant, the weight mask $\beta$, the prediction mask $\propto$, or both can be removed from the predictive hybrid INR network.

**FIG. 10** illustrates a block diagram illustrating an example video decoder 1000 applying a predictive hybrid INR network. The decoder 1000 receives, as an input, a bitstream 1010 and outputs reconstructed images 1070. The decoder 1000 includes a hybrid INR network 1020, a motion compensation unit 1030, a multiplier 1040, an adder 1050, and a decoded frame buffer 1060. The hybrid INR network 1020 generally operates (in an inference mode) as the hybrid INR network described in reference to FIG. 7. However, in this case the hybrid INR network produces two optical flows, $v_{ref1}$ and $v_{ref2}$, a weight mask $\beta$, a prediction mask $\propto$, and a residual image r. The optical flows represent the pixel-wise motion between respective reference frames (already reconstructed images 1070, stored in the decoded frame buffer 1060) and the current frame. And so, the motion compensation unit 1030 can use these optical flows to generate a prediction, denoted by $\tilde{x}$, of the currently decoded image **x,** as expressed by equation (9). As illustrated in FIG. 10, the prediction image $\tilde{x}$ (output of the motion compensation unit 1030) is then corrected by the residual image **r,** as shown by equation (10). Adding 1050 the masked prediction image, $\propto \cdot \tilde{x}$, to the residual image **r** produces the reconstructed image 1070, $\hat{x}$.

In the example solution introduced above, entropy coding of the latent grids in hybrid INR is the same for the whole signal. However, in low-frequency parts of the signals, high resolution latent grids usually contain little to no information. Encoding those latent values leads to unnecessary rate increase and/or to unnecessary computation for decoding them.

Embodiments described hereafter have been designed with the foregoing in mind and propose a hybrid INR network wherein the signal is partitioned, thus inducing a partition of the latent grid, and some parts of the latent grid are not encoded. This technique allows to reduce the unnecessary rate increase and/or decoding computation caused by higher resolution latent grids coding by partitioning the signal and not coding high resolution latent values in low frequency parts of the signal.

Embodiments described herein apply to a signal handled using feature-based INR methods and propose to partition the signal and specify a highest level of latent grid to be used for each partition. As a result, higher levels may not be encoded nor decoded, saving bitrate and decoding operations. This allows to decrease the bit rate and the decoding complexity of low frequency part of a signal using feature-based INR methods. Such approach has a far lower computational complexity than end-to-end neural compression approaches.

For the sake of simplicity, the description herein is done in the context of a 2D video signal but applies similarly to 360° videos, 3D point clouds, audio, haptics, or other types of content.

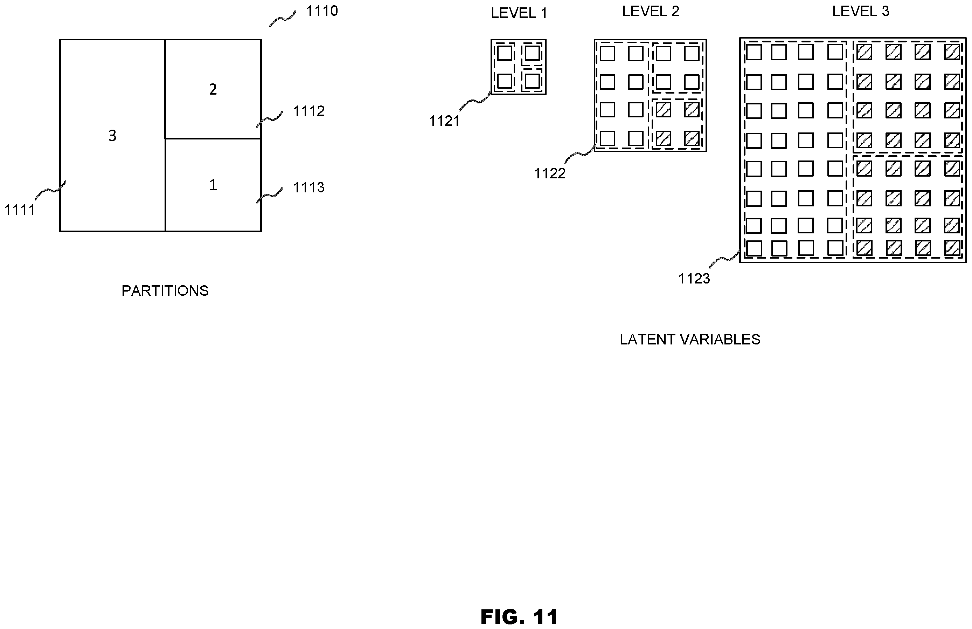

**FIG. 11** illustrates the principles of partitioning latent levels according to embodiments. In this example, the signal (1110) is partitioned into three coding units. A highest level of latent grid is associated to each of the coding units. In the largest coding unit (1111), on the left of the signal, the highest level of latent grid is defined to be 3. The other two coding units (1112, 1113) have an associated highest level of latent grid of 2 and 1, respectively. When decomposed into multiple levels, for each partition of the signal, the latent variables are set to a default value for levels higher than the maximum grid level defined for the partition. In at least one embodiment, the default value is set to '0'.

At the first level, represented by the element 1121, all latent variables are obtained from the encoded data. At the second level, represented by the element 1122, only latent variables for the coding units 1111 and 1112 are obtained from the encoded data. The latent variables for the coding unit 1113 are not obtained from the encoded data but set to a default value, as illustrated using a diagonal hatching. At the third level, represented by the element 1123, only latent variables for the coding unit 1111 are obtained from the encoded data. The latent variables for the coding units 1112 and 1113 are not obtained from the encoded data but set to a default value, as illustrated again using the diagonal hatching.

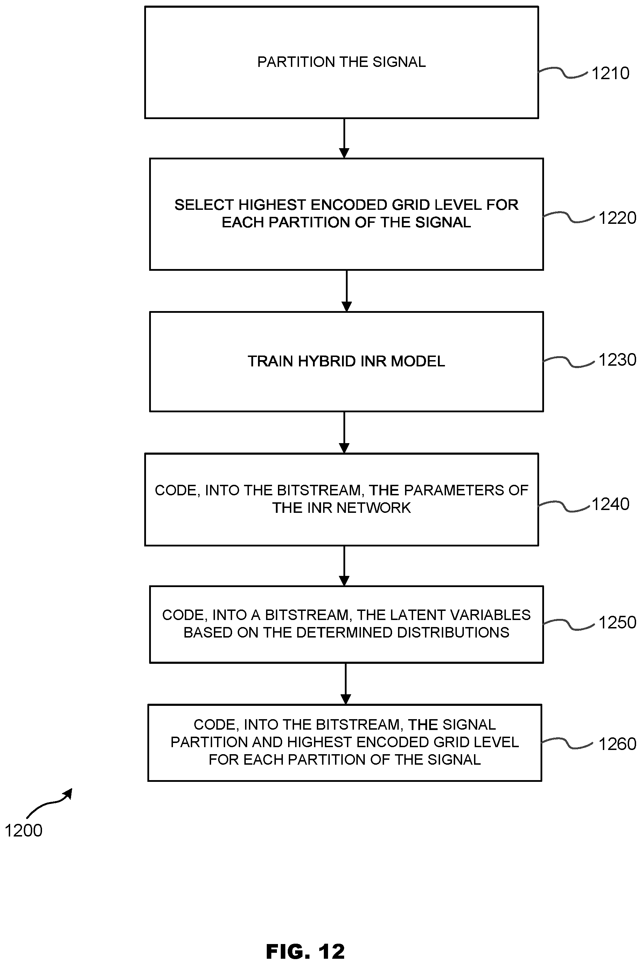

FIG. 12 illustrates an example process for encoding data based on a hybrid INR network using a partition-based latent level according to embodiments. Such encoding process 1200 is for example implemented by a processor 110 of a device 1000 of figure 1. The process is operated for example on a full size image, that may correspond to one frame of a video. The process may also be operated on smaller elements such as an image patch or a block of an image. In step 1210, the processor partitions the signal (e.g.; an image) into multiple parts or coding units (CU). Examples of possible partitions include fixed-size window, quadtree, superpixels, binary-tree, ternary-tree partitioning, asymmetric binary tree, multi-type tree or other type of partitions. Many approaches are possible to partition the signal into CU. A brute force approach is possible, where all possible partitions are considered. Another possible approach is a greedy search where an initial CU covering the whole signal is incrementally divided by evaluating the impact of a CU split and splitting is done if the impact in terms of rate/distortion is positive. In other words, a CU is split further if its encoding (together with its associated latent grids) is less advantageous in terms of rate distortion than encoding its children. It is also possible to build the CU partitions without using or learning hybrid INR networks. As an example, both a brute force or a greedy search approach could optimize other characteristics of the CUs, such as pixel mean, variance, texture and/or any other statistics of the signal within the considered CUs. Another possible approach is to use a segmentation algorithm that uses the characteristics of the image to choose a good partitioning, including segmentation algorithm based on machine learning. In step 1220, the processor selects a Highest Encoded Grid Level (HEGL) for each part of the signal, or in other words, a maximal encoded latent depth. This step associates one HEGL value $\in \{0: (K - 1)\}$ to each part of the signal. It may involve evaluating the performance of different HEGLs on this part of the signal, comparing these performances to different HEGL and on other parts of the signal, or choosing one HEGL directly based on the characteristics of this part of the signal, for example through an expert designed algorithm or a machine learning model. As an example, a brute force approach would evaluate all possible HEGL in terms of bitrate and distortion and select the value that maximizes the cost associated to the encoding and reconstruction of that part of the signal as a function of the HEGL for that part of the signal. In step 1230, the process trains the Hybrid INR model, using the selected HEGL for each part of the signal. This may be done for example by forcing to a default value (such as 0) all values of a grid whose level is larger than the selected HEGL for that partition of the signal, or by disabling encoding of these values and disabling gradient updates for these values during the training procedure, or by reinitializing these values to the default after each training iteration. Apart from this difference, this is the same procedure as training a hybrid INR model. In at least one embodiment, the full INR model is trained together, including the synthesis network, the latent values and the autoregressive model (or other model) yielding a probability distribution over the latent values. In another embodiment, the model is trained without forcing higher grid levels to the default, but this is done after training, either explicitly or implicitly by not encoding them in the next step. The autoregressive model may be retrained to better encode these modified precomputed latent values. In some variants, training may involve quantization aware training. The training procedure may also involve steps to account for the coding of the probability model, such as quantization, pruning, etc, for example by applying these steps, using additional noise and/or adding specific terms to the loss function such as the rate of the network parameters. In step 1240, the processor encodes information representative of the parameters of the hybrid INR, for example in a bitstream that may be distributed over a network. These parameters allow to instantiate the neural network, so that a decoder can perform the inference and reconstruct the signal. The parameters comprise for example a probability model, a synthesis model and, if applicable, an upsampling model. If the model involves a neural network, this is typically done by a neural compression codec such as Neural Network Coding (NNC)/ ISO/IEC 15938-17 or MPEG-7 part 17 or simply by quantizing the weights and/or pruning some neurons from the network. In step 1250, the processor encodes, in the bitstream, information representative of the latent values. These latent values are coded by an entropy coder, based on the discrete probability distribution over the quantized latent features given by the autoregressive model (or other model). This may involve quantization of the latent features if this was not done before. Finally, in step 1260, the processor encodes information representative of the partitions of the signal and of the HEGL in the bitstream. This may involve the use of entropy coders. We can also use the method used in the video coding standard, for example, in HEVC or VVC, to signal the partitioning.

The procedure above describes a sequential approach to solve the aforementioned optimization problem. There are many possible variants of this procedure in addition to those listed above. For example, several elements could be optimized at the same time. The partition, the HEGL, the parameters and/or the encoding length could be optimized together using any optimization algorithm such as greedy search, gradient descent of a specific loss, genetic algorithms, the use of machine learning algorithms etc. As another example, the selection of the HEGL could be based on the result of the encoding of previous parts using one HEGL for example using a reinforcement learning or an active learning algorithm.

In yet another example, one or multiple steps may also involve some computation that can be beneficial or reused for another step. Some approaches for partitioning the signal or choosing the HEGL may require the computation and the evaluation of hybrid INR models, to evaluate the quality of such a partitioning and/or HEGL. In that case, these computations may be reused in the other step or the results of that other step may be directly obtained from said computation or the two steps merged. Here is a procedure that illustrates a merged 2nd and 3rd step.

- *input* a partitioned signal and a trade-off parameter $\lambda$, default value a (e.g. 0), a max grid level $K$ - 1.

- *output* = []

- Compute a hybrid INR model encoding the signal, using the highest possible grid level for all parts of the signal, yielding the parameters $\theta$ for the hybrid INR. Set *cost* = $D(x, f_\theta) + \lambda R(\theta)$

- Set no constrain on HEGL values: S = {}, set $\theta^* = \theta$

- For every partition $C_i$ of the signal:

  ○ For every possible HEGL $l$ in {$K$ - 1, ..., 0}, in decreasing order

    ▪ s = Constrain values of the grid of level $l$ in part $C_i$ to be equal to $l$ or lower.

    ▪ Compute a hybrid INR model $f_{\theta,S\cup\{s\}}$ encoding the signal, using constraints S $\cup$ {s} , yielding the parameters $\theta$ for the hybrid INR.

    ▪ Optionally, obtain $\tilde{\theta}$, the parameters as will be reconstructed by the decoder, for example after entropy coding and/or quantization. Set $\theta = \tilde{\theta}$

    ▪

$$\text{Set } new\_cost = D\big(\boldsymbol{x}, f_{\boldsymbol{\theta},S\cup\{s\}}\big) + \lambda R(\theta)$$

    ▪ If (new cost < cost):

      - Cost = new_cost
      -

$$\text{S} = S \cup \{s\}$$

      -

$$\theta^* = \theta$$

- Output S and $\theta^*$.

In at least one embodiment, the default value for higher grid levels can be trained and included in the bitstream. In another variant, a default value may be trained for each coding unit and/or level of the grid and included in the bitstream.
In at least one embodiment, the encoder may choose one lowest encoded grid level for each part of the signal instead of or in addition to a HEGL. It defines a minimum level of latent grids that will be encoded for that part of the signal.
In at least one embodiment, the bitstream is stored in a file or in a memory.

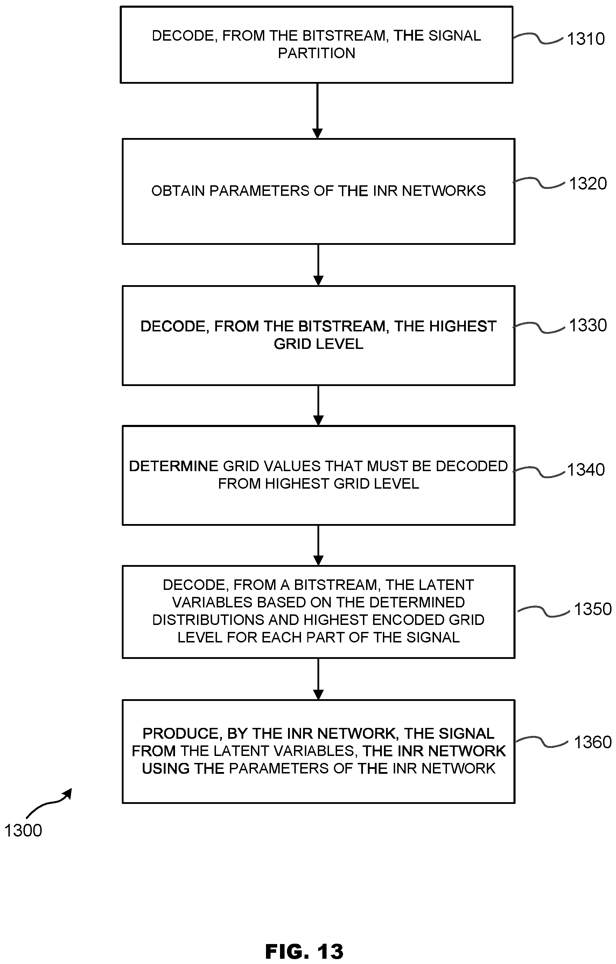

FIG. 13 illustrates an example process for decoding encoded data based on a hybrid INR network using a partition-based latent level according to embodiments. Such decoding process 1300 is for example implemented by a processor 110 of a device 1000 of figure 1 and operates on a bitstream obtained from a file or through a network. A first part is about decoding the latent values and a second part is about using the latent values as input to an INR synthesis network to reconstruct the signal.
For the first part, in step 1310, the processor decodes information representative of the partitioning of the signal. In step 1320, the processor obtains information representative of the parameters of the INR network, comprising for example auto-regressive or other probability model. These parameters may be decoded from the bitstream for example or may be reused from another frame or may be obtained by other means. In step 1330, the processor decodes information representative of the HEGL associated to the partitions of the signal. In step 1340, based on the HEGL information, the processor selects the grid values that must be decoded: for each partition of the signal, only the latent values in a grid level lower or equal to the HEGL associated to the partition must be decoded. The latent values for the selected grid values are decoded and other values (i.e., not selected) are set to the default value (for example set to zero). In other words, when the grid level of a partition is higher than the HEGL associated to the partition, this means that the latent values of such partition are not transmitted and should be set to a default value by the decoder. In step 1350, the processor decodes latent values, for example using the auto-regressive or other probability model and an entropy decoder as in any hybrid INR method and described above. This step is only valid for the partitions having an associated HEGL higher than the grid level.

In at least one embodiment, a global, level and/or part specific default value may be decoded from the bitstream and used instead of the default value. In at least one embodiment, the latent grids may be decoded part by part instead of sequentially. In at least one embodiment, the latent grids of the different parts are concatenated (based on the position of the different parts) to obtain signal-wide grids, as in classical hybrid INR methods. In at least one embodiment, the values decoded for each part may be directly stored in signal-wide grids during decoding.

In the second part, in step 1360, the processor uses the latent features to decode the signal, following the conventional process for hybrid INR models. Such decoding process may require to upsample the decoded features (an upsampling network may be acquired for that purpose, for example obtained from the bitstream). The synthesis network is obtained. This is for example done by decoding it from the bitstream, but it may already be available to the decoder, for example because it has been used for another part of the signal or is transmitted separately. The upsampled features are used by the synthesis network to decode the signal. For 2D images or video, the output of the synthesis network would typically be pixel colors allowing to reconstruct the image. For 3D scenes, the output would typically be color and density of a voxel. For 3D surfaces (e.g. hologram), the output may be a signed or unsigned distance to the surface.

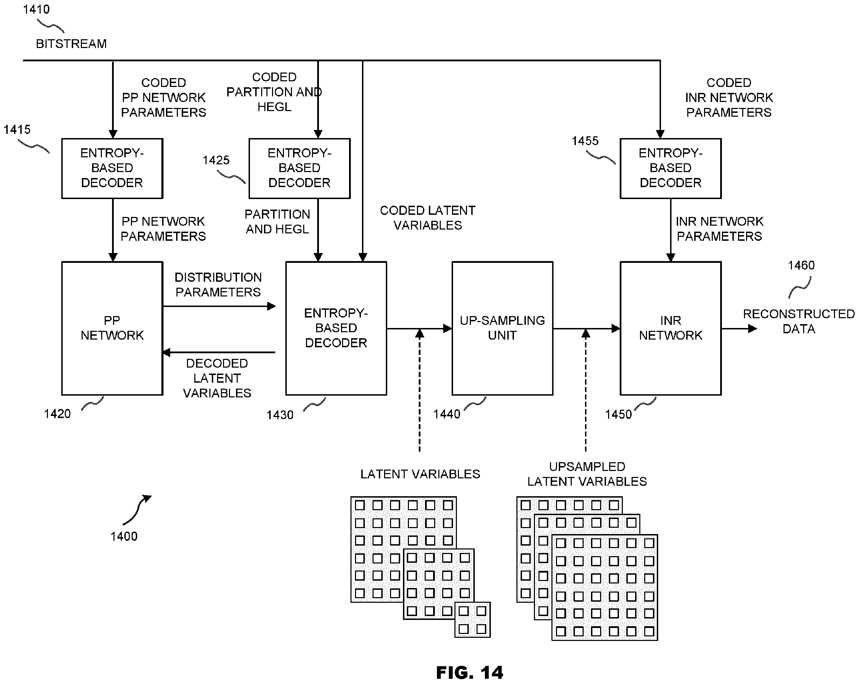

FIG. 14 is a block diagram illustrating an example video decoder based on hybrid INR network combined with a partition-based latent level according to an embodiment. Such video decoder builds upon the video decoder introduced in FIG. 7. The decoder 1400 includes a PP network 1420, an up-sampling unit 1440, an INR network 1450, and entropy-based decoders 1415, 1425, 1430, 1455. The entropy-based decoder 1425 decodes the signal partition and HEGL associated to each part of the signal from the bitstream 1410. The partition and HEGL values are used by the entropy-based decoded 1430 to identify the latent values that must be decoded. Other latent values are set to a default value (for example zero). The PP network 1420 produces distribution parameters of respective latent variables. The PP network 1420 operates based on learned PP network parameters $\psi$, determined during the training of the PP network 620. The entropy-based decoder 1415 decodes these PP network parameters from the bitstream 1410. Based on the produced 1420 distribution parameters, the entropy-based decoder 1430 decodes the identified latent variables from the bitstream 1410. Already decoded latent variables are provided back to PP network to serve as a context in producing the distribution parameters of the currently decoded latent variable (as further described in reference to FIG. 8). The decoded latent variables are then upsampled by the up-sampling unit 1440 (as performed by the up-sampling unit 640 at the encoder 600). Fed by the up-sampled latent variables, the INR network 1450 reconstructs the data 1460 (e.g., a reconstructed image of a video frame) it is trained to synthesize based on the INR network parameters, decoded from the bitstream 1410 by the entropy-based decoder 1455.

In at least one embodiment, the signal may be decoded partition by partition using the grids decoded for each partition. The signal is then reconstructed by concatenating the signal partition together, based on the position of the different partitions.

The illustrations of the aspects described herein are intended to provide a general understanding of the structure, function, and operation of the various aspects. The illustrations are not intended to serve as a complete description of all of the elements and features of apparatuses and systems that utilize the structures or methods described herein. Many other aspects may be apparent to those of skill in the art upon reviewing the disclosure. Other aspects may be utilized and derived from the disclosure, such that structural and logical substitutions and changes may be made without departing from the scope of the disclosure. Accordingly, the disclosure and the figures are to be regarded as illustrative rather than restrictive.

The description of the aspects is provided to enable the making or use of the aspects. Various modifications to these aspects will be readily apparent, and the generic principles defined herein may be applied to other aspects without departing from the scope of the disclosure. Thus, the present disclosure is not intended to be limited to the aspects shown herein but is to be accorded the widest scope possible consistent with the principles and novel features as defined by the following claims.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, tablets, smartphones, cell phones, portable/personal digital assistants, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

In the present application, the terms "reconstructed" and "decoded" may be used interchangeably, the terms "pixel" and "sample" may be used interchangeably, the terms "image," "picture", "map", "frame", "slice" and "tiles" may be used interchangeably. Usually, but not necessarily, the term "reconstructed" is used at the encoder side while "decoded" is used at the decoder side. The term compressed represents the result of an encoding step followed by a decoding step.

In the present application, the terms "INR network synthesis" and "INR Network" may be used interchangeably. In the present application, the terms "data" and "signal" may be used interchangeably. In the present application, the terms "partition", "part of a signal" and "part" may be used interchangeably.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of an illumination compensation parameter. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types.

**Claims**

1. A method comprising:

   partitioning a signal,
   selecting a highest encoded grid level for partitions of the signal,
   training a hybrid implicit neural representation (INR) network, and
   encoding, into a bitstream, information representative of parameters of the INR network, of latent variables, of partitions of the signal and of the highest encoded grid level for partitions of the signal.

2. The method of claim 1, wherein selecting a highest encoded grid level for a partition is done through a brute force approach that evaluates all possible highest encoded grid levels in terms of bitrate and distortion and selects a value that maximizes a cost associated to the encoding and reconstruction of that partition as a function of the highest encoded grid level for that partition.

3. The method of claim 1, wherein selecting a highest encoded grid level for a partition is done based on characteristics of this partition, through an expert designed algorithm or a machine learning model.

4. A method comprising:

   obtaining a bitstream carrying an encoded signal, the encoded signal comprising information representative of parameters of an INR network, of latent variables, of partitions of the signal and of the highest encoded grid level for partitions of the signal,
   selecting partitions for which latent variables must be decoded based on the highest encoded grid level for partitions of the signal,
   decoding latent variables for the selected partitions and set a default value for latent variables of the other partitions, and
   producing the signal using an INR network having the latent variables as input, the INR network being configured using the obtained parameters.

5. The method of claim 4, wherein the default value is zero.

6. The method of any of claim 1 or 4, wherein the bitstream further comprises the default value.

7. The method of claim 6, wherein the default value is trained.

8. The method of claim 6, wherein the default value for higher grid levels is trained.

9. The method of claim 6, wherein the default value for each coding unit and/or each level of the grid is trained.

10. The method of claim 6, wherein the encoded signal comprises one lowest encoded grid level for each part of the signal instead of or in addition to a highest encoded grid level.

11. An apparatus comprising a processor configured to:

    partition a signal,
    select a highest encoded grid level for partitions of the signal,
    train a hybrid implicit neural representation (INR) network, and
    encode, into a bitstream, information representative of parameters of the INR network, of latent variables, of partitions of the signal and of the highest encoded grid level for partitions of the signal.

12. An apparatus comprising a processor configured to:

   obtain a bitstream carrying an encoded signal, the encoded signal comprising information representative of parameters of an INR network, of latent variables, of partitions of the signal and of the highest encoded grid level for partitions of the signal,
   select partitions for which latent variables must be decoded based on the highest encoded grid level for partitions of the signal,
   decode latent variables for the selected partitions and set a default value for latent variables of the other partitions, and
   produce the signal using an INR network having the latent variables as input, the INR network being configured using the obtained parameters.

13. A non-transitory computer readable medium storing a bitstream encoded according to the method of claim 1.

14. A computer program comprising program code instructions for implementing the method according to any of claims 1 to 6 when executed by a processor.

15. A non-transitory computer readable medium storing program code instructions for implementing the method according to any of claims 1 to 6 when executed by a processor.

**FIG. 1**

EP 4 730 789 A1

FIG. 2

EP 4 730 789 A1

INPUT DATA —310 → INR-BASED ENCODER —320 → QUANTIZER —330 → ENTROPY-BASED ENCODER —340 → BITSREAM —350

**FIG. 3**

300

BITSTREAM —410 → ENTROPY-BASED DECODER —420 → DEQUANTIZER —430 → INR-BASED DECODER —440 → RECONSTRUCTED DATA —450

**FIG. 4**

400

**FIG. 5**

EP 4 730 789 A1

**FIG. 6**

EP 4 730 789 A1

**FIG. 7**

**FIG. 8**

EP 4 730 789 A1

**FIG. 9**

**FIG. 10**

EP 4 730 789 A1

PARTITIONS

LEVEL 1  LEVEL 2  LEVEL 3

LATENT VARIABLES

**FIG. 11**

EP 4 730 789 A1

PARTITION THE SIGNAL — 1210

SELECT HIGHEST ENCODED GRID LEVEL FOR EACH PARTITION OF THE SIGNAL — 1220

TRAIN HYBRID INR MODEL — 1230

CODE, INTO THE BITSTREAM, THE PARAMETERS OF THE INR NETWORK — 1240

CODE, INTO A BITSTREAM, THE LATENT VARIABLES BASED ON THE DETERMINED DISTRIBUTIONS — 1250

CODE, INTO THE BITSTREAM, THE SIGNAL PARTITION AND HIGHEST ENCODED GRID LEVEL FOR EACH PARTITION OF THE SIGNAL — 1260

1200

**FIG. 12**

DECODE, FROM THE BITSTREAM, THE SIGNAL PARTITION — 1310

OBTAIN PARAMETERS OF THE INR NETWORKS — 1320

DECODE, FROM THE BITSTREAM, THE HIGHEST GRID LEVEL — 1330

DETERMINE GRID VALUES THAT MUST BE DECODED FROM HIGHEST GRID LEVEL — 1340

DECODE, FROM A BITSTREAM, THE LATENT VARIABLES BASED ON THE DETERMINED DISTRIBUTIONS AND HIGHEST ENCODED GRID LEVEL FOR EACH PART OF THE SIGNAL — 1350

PRODUCE, BY THE INR NETWORK, THE SIGNAL FROM THE LATENT VARIABLES, THE INR NETWORK USING THE PARAMETERS OF THE INR NETWORK — 1360

1300

**FIG. 13**

**FIG. 14**

Europäisches
Patentamt

European
Patent Office

Office européen
des brevets

## EUROPEAN SEARCH REPORT

**Application Number**

EP 24 30 6764

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HYUNJIK KIM ET AL: "C3: High-performance and low-complexity neural compression from a single image or video", ARXIV.ORG, CORNELL UNIVERSITY LIBRARY, 201 OLIN LIBRARY CORNELL UNIVERSITY ITHACA, NY 14853, 5 December 2023 (2023-12-05), XP091664794, * abstract; figure 2 * * paragraphs [0002], [0003], [0A.1] * ----- | 1-15 | INV. H04N19/119 G06N3/047 H04N19/132 H04N19/147 H04N19/46 H04N19/50 H04N19/59 |
| X | XIANG LIU ET AL: "An Efficient Implicit Neural Representation Image Codec Based on Mixed Autoregressive Model for Low-Complexity Decoding", ARXIV.ORG, CORNELL UNIVERSITY LIBRARY, 201 OLIN LIBRARY CORNELL UNIVERSITY ITHACA, NY 14853, 23 January 2024 (2024-01-23), XP091779852, * paragraph [0002]; figure 3 * ----- | 1,4, 11-15 | |
| X | TRUNG HIEU LE ET AL: "INR-MDSQC: Implicit Neural Representation Multiple Description Scalar Quantization for robust image Coding", ARXIV.ORG, CORNELL UNIVERSITY LIBRARY, 201 OLIN LIBRARY CORNELL UNIVERSITY ITHACA, NY 14853, 7 August 2023 (2023-08-07), XP091581920, * paragraph [00II]; figure 1 * ----- -/-- | 1,4, 11-15 | TECHNICAL FIELDS SEARCHED (IPC) H04N G06N |

The present search report has been drawn up for all claims

| Place of search | Date of completion of the search | Examiner |
|---|---|---|
| Munich | 7 March 2025 | Cakiroglu Garton, S |

EPO FORM 1503 03.82 (P04C01)

**page 1 of 2**

| | Europäisches Patentamt European Patent Office Office européen des brevets | **EUROPEAN SEARCH REPORT** | **Application Number** EP 24 30 6764 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HAO LI ET AL: "[INVR] Report on EE1.1: Exploration experiments of 2D INVR methods in inter configuration", 144. MPEG MEETING; 20231016 - 20231020; HANNOVER; (MOTION PICTURE EXPERT GROUP OR ISO/IEC JTC1/SC29/WG11), , no. m65486 10 October 2023 (2023-10-10), XP030313117, Retrieved from the Internet: URL:https://dms.mpeg.expert/doc_end_user/documents/144_Hannover/wg11/m65486-v1-EE_2D_INVR_ZJU.zip 2D_INVR/Exploration experiments of 2D INVR methods in inter configuration.docx [retrieved on 2023-10-10] * the whole document * ----- | 1-15 | |
| A | JOO CHAN LEE ET AL: "FFNeRV: Flow-Guided Frame-Wise Neural Representations for Videos", ARXIV.ORG, CORNELL UNIVERSITY LIBRARY, 201 OLIN LIBRARY CORNELL UNIVERSITY ITHACA, NY 14853, 23 December 2022 (2022-12-23), XP091401693, * the whole document * ----- | 1-15 | TECHNICAL FIELDS SEARCHED (IPC) |

The present search report has been drawn up for all claims

| Place of search | Date of completion of the search | Examiner |
|---|---|---|
| Munich | 7 March 2025 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LADUNE et al.** COOL-CHIC: Coordinate-based low complexity hierarchical image codec. *International Conference on Computer Vision (ICCV)*, 2023
- **HYUNJIK et al.** C3: High-Performance and Low-Complexity Neural Compression from a Single Image or Video. *Proceedings of the IEEE/CVF Conference on Computer Vision and Pattern Recognition (CVPR)*, 2024, 9347-9358

- Cool-chic video: Learned video coding with 800 parameters. **LEGUAY et al.** Data Compression Conference (DCC) 2024. IEEE, 2024, 23-32